# EUROPEAN PATENT APPLICATION

(11) **EP 1 462 729 A2**
(43) Date of publication of application: **29.09.2004**
(21) Application number: 04075715.5
(22) Date of filing: 10.03.2004
(51) Int. Cl.: F24F 3/14

(54) **Dehumidifiers**

(30) Priority: 25.03.2003 GB 3068815
(71) Applicant: EBAC LIMITED, Bishop Auckland, County Durham DL14 9AL (GB)
(72) Inventor: Elliott, John Malcolm, Country Durham, DL14 7QZ (GB)
(74) Representative: Craske, Stephen Allan

(57) **Abstract**

In a dehumidifier of the kind having a vapour compression circuit containing an evaporator 5 and a condenser 3, a flow modulator 10 is provided to vary the flow of refrigerant around the circuit in accordance with external atmospheric conditions. External humidity and ambient temperature are monitored by sensors 12 and 13, and a control unit 11 varies the on/off periods of the flow modulator to bring the evaporating temperature, monitored by a sensor 14, to optimum conditions for maximum water extraction. The flow is also controlled to maintain the evaporator temperature above 0°C when external air temperature falls below the point at which icing of the evaporator would normally occur.

## Description

### TECHNICAL FIELD OF THE INVENTION

This invention relates to dehumidifiers of the kind having a vapour compression circuit containing an evaporator and a condenser.

### BACKGROUND

In a conventional dehumidifier the temperature of the evaporator is self-adjusting with ambient conditions. An increase in ambient air temperature causes greater heat transfer to the refrigerant and hence raises the refrigeration temperature and pressure. Thus, the system tends to regulate itself.

In a typical dehumidifier working under average conditions the evaporator tends to maintain a temperature of around 18°C below ambient, which means that the evaporator will ice up when the ambient temperature drops below about 18°C. This is inefficient for several reasons. Firstly, the system uses additional energy to freeze water extracted from the atmosphere. Secondly, even more energy is required to defrost the evaporator, and thirdly, useful water extraction time is lost during the defrosting period.

The present invention seeks to provide a new and inventive form of dehumidifier which is capable of improved water extraction over a broad range of operating conditions.

### SUMMARY OF THE INVENTION

The present invention proposes a method of operating a dehumidifier of the kind having a vapour compression circuit containing an evaporator and a condenser, in which the flow of refrigerant around the circuit is varied in accordance with external atmospheric conditions such as to increase water extraction
*characterised in that*
the flow of refrigerant is controlled in a pulsed manner and the flow is changed by varying the on/off ratio of the pulses.

The invention further provides a dehumidifier of the kind having a vapour compression circuit containing an evaporator and a condenser, in which said circuit includes means for varying the flow of refrigerant around the circuit in accordance with external atmospheric conditions such as to increase water extraction
*characterised in that*
the means for varying the flow of refrigerant is arranged to control the flow of refrigerant in a pulsed manner and the flow is changed by varying the on/off ratio of the pulses.

The flow may be varied in accordance with the relative humidity and temperature of the external atmosphere such that the flow is reduced as the humidity falls. Reducing the flow reduces the operating temperature of the evaporator so that water extraction is improved at low humidity levels at the expense of a reduction in total evaporator cooling area.

The flow may be controlled such as maintain the evaporating temperature at an optimum value for maximum water extraction under the prevailing atmospheric conditions.

Refrigerant flow may also be increased to increase the evaporating temperature when the ambient temperature falls below the point which would normally cause ice to form on the evaporator.

### BRIEF DESCRIPTION OF THE DRAWINGS

The following description and the accompanying drawings referred to therein are included by way of non-limiting example in order to illustrate how the invention may be put into practice. In the drawings:
Figure 1 is a schematic diagram of a dehumidifier in accordance with the invention;
Figure 2 is a graph showing how the flow of the vapour compression circuit is controlled under conditions of high relative humidity; and
Figure 3 is a similar graph showing how the flow is controlled under low relative humidity conditions.

### DETAILED DESCRIPTION OF THE DRAWINGS

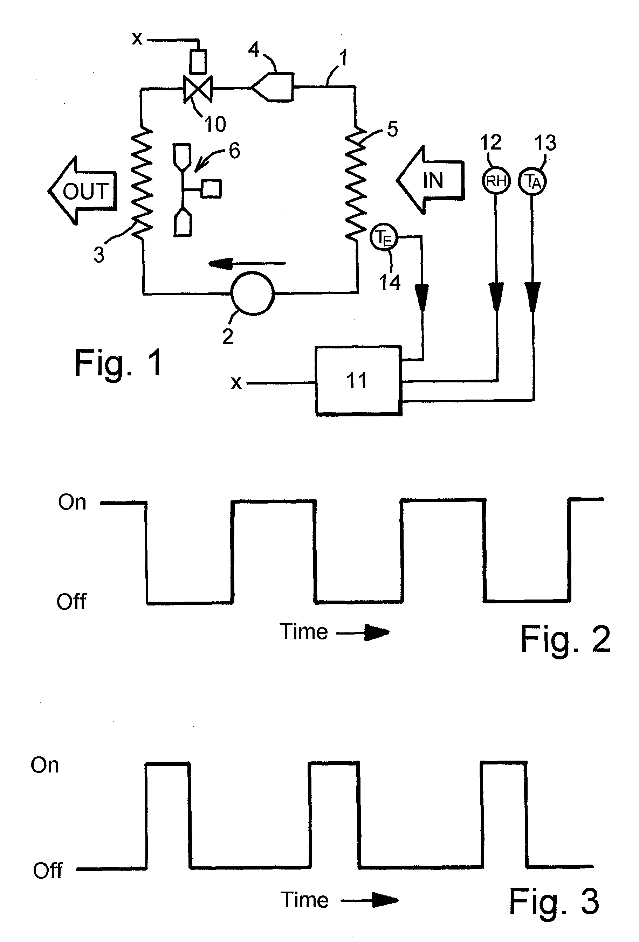

The dehumidifier shown in **Fig. 1** incorporates a vapour compression circuit 1 in which a compressor 2 circulates refrigerant vapour under pressure through a condenser 3 wherein the refrigerant condenses and gives out heat. Condensed refrigerant then passes through an expansion device such as a valve or small bore tube 4 providing a restriction which reduces the temperature and pressure of the refrigerant entering evaporator coils 5. Vaporisation of the refrigerant in the evaporator 5 absorbs heat from ambient air so that the resulting temperature drop causes water vapour in the air to condense out on the surfaces of the evaporator coils. The ambient air is drawn into the dehumidifier by a fan 6, and after passing over the evaporator coils the air passes over the condenser to receive heat from the refrigerant so that the dehumidifier discharges warm air into the external environment. Refrigerant vapour from the evaporator coils is recirculated by the compressor 2 in a continuous cycle of condensation and evaporation.

The main aim of the present invention is to maintain an optimum evaporating temperature for maximum water removal. A second aim is to reduce ice formation on the evaporator. To achieve these objectives, the flow of refrigerant around the circuit 1 is controlled by an electro-mechanical flow modulator 10 which, in this example, is inserted between the condenser 3 and the expansion device 4. Various forms of flow modulator may be used, but a simple form of the device would be a solenoid controlled valve. The operation of the flow modulator 10 is controlled by an electronic controller 11, which also receives input from a humidity sensor 12 arranged to monitor the ambient air at the point where it enters the dehumidifier before contact with the evaporator 5, an ambient temperature sensor 13 positioned adjacent to the humidity sensor 12, and a refrigerant temperature sensor 14 arranged to monitor the temperature of the evaporator 5. In operation of a conventional dehumidifier, the flow of refrigerant establishes an evaporator temperature which is dependent upon the ambient temperature T_{A} and relative humidity RH. However, the controller 11 is able to control the flow of refrigerant by means of the modulator 10 in order to achieve the best evaporator temperature T_{E} for optimum water removal depending on the external conditions as monitored by the sensors 12 and 13.

The controller 11 may also control other components of the dehumidifier such as the compressor 2 and the fan 6 such that the compression circuit operates with alternating run and defrost cycles in known manner.

The controller 11 will typically employ a microprocessor which periodically reads the data from the humidity sensor 12 and ambient temperature sensor 13 and operates the flow modulator 10 in accordance with the incoming data such as to maximise condensation of water on the evaporator 5 under a wide range of environmental operating conditions. This may conveniently be achieved by using lookup tables to relate various conditions of humidity and ambient temperature to optimum evaporating temperature. The compressor 2 runs continuously, but by operating the solenoid of the flow modulator in a pulsed manner and varying the width of the pulses (i.e. using pulse width modulation) it is possible to vary the average flow of refrigerant around the vapour compression circuit to bring the evaporating temperature to the desired figure.

Increasing the flow of refrigerant causes an increase in pressure within the circuit so that the temperature of evaporation within the evaporator will rise. The capacity of the system also increases, i.e. there is a greater mass flow. Conversely, reducing the flow causes a reduction in system temperature and pressure so that the temperature of the evaporator will be reduced. On the other hand, the capacity of the compressor is reduced and there is a greater heat transfer per square cm of evaporator surface area so that the total surface area which is available for water extraction will be less.

The way in which the flow is controlled under varying conditions of relative humidity and temperature will now be described in greater detail.

Under conditions of high relative humidity the evaporator can be operated at a relatively high temperature so that the average flow around the vapour compression circuit is increased. At 90% RH the dew point will only be slightly less that the ambient temperature so that a higher evaporator temperature will achieve good water extraction. This condition is shown in **Fig. 2**, from which it will be noted that the time for which the solenoid is ON and the flow modulator valve is open is high relative to the OFF time. At this point it should also be noted that it is not necessary for the flow modulator valve to completely shut off flow, so that the OFF time could simply correspond to a period of restricted flow. When the external relative humidity falls a lower evaporator temperature is required in order to obtain a suitable extraction level. For example, at 50% RH the dew point could be around 10°C below ambient temperature so that an evaporator temperature of at least 11°C below ambient would be necessary to achieve water extraction. In these circumstances the flow is reduced by decreasing the duration of the ON time relative to the OFF time, as indicated in **Fig. 3**. The refrigerant flow is not solely determined by RH since the dew point temperature is affected by the ambient temperature as well as the relative humidity, but the controller 11 aims to maintain the evaporator at an optimum temperature, as detected by the sensor 14, depending on both the ambient temperature and relative humidity. By controlling the evaporating temperature rather than simply relying on auto-regulation it is possible to achieve an increased efficiency and improve water extraction.

When the ambient temperature falls to about 18°C the evaporator would normally start to ice up so that the controller 11 would be required to operate with alternate run and defrost cycles. However, by monitoring the temperature of the evaporator using the sensor 14 and increasing the flow around the vapour compression circuit when the temperature falls below about 18°C it is possible to prevent icing at ambient temperatures between about 18°C and 15°C.

It will be appreciated that the features disclosed herein may be present in any feasible combination. Whilst the above description lays emphasis on those areas which, in combination, are believed to be new, protection is claimed for any inventive combination of the features disclosed herein.

## Claims

1. A method of operating a dehumidifier of the kind having a vapour compression circuit containing an evaporator (5) and a condenser (3), in which the flow of refrigerant around the circuit is varied in accordance with external atmospheric conditions such as to increase water extraction
***characterised in that***
the flow of refrigerant is controlled in a pulsed manner and the flow is changed by varying the on/off ratio of the pulses.

2. A method according to Claim 1, in which flow of refrigerant is varied to achieve a target evaporator temperature for optimum water extraction.

3. A method according to Claim 1 or 2, in which flow of refrigerant is varied in accordance with the relative humidity of the external atmosphere.

4. A method according to Claim 1, 2 or 3, in which flow of refrigerant is varied in accordance with the temperature of the external atmosphere.

5. A method according to any preceding claim, in which flow of refrigerant is increased to reduce icing of the evaporator at low ambient temperatures.

6. A dehumidifier of the kind having a vapour compression circuit containing an evaporator (5) and a condenser (3), in which said circuit includes means (10) for varying the flow of refrigerant around the circuit in accordance with external atmospheric conditions such as to increase water extraction
***characterised in that***
the means (10) for varying the flow of refrigerant is arranged to control the flow of refrigerant in a pulsed manner and the flow is changed by varying the on/off ratio of the pulses.

7. A dehumidifier according to Claim 6, including a temperature sensor (14) which is arranged to monitor the evaporating temperature to achieve a target evaporator temperature for optimum water extraction.

8. A dehumidifier according to Claim 6 or 7, including a humidity sensor (12) for monitoring the relative humidity of the external atmosphere to control the flow of refrigerant.

9. A dehumidifier according to Claim 6, 7 or 8, including a temperature sensor (13) for monitoring the temperature of the external atmosphere to control the flow of refrigerant.

10. A dehumidifier according to any of Claims 6 to 9, in which flow of refrigerant is increased to reduce icing of the evaporator at low ambient temperatures.
